# EUROPEAN PATENT APPLICATION

(11) **EP 3 787 178 A1**
(43) Date of publication of application: **03.03.2021**
(21) Application number: 19194746.4
(22) Date of filing: 30.08.2019
(51) Int. Cl.: H02N 2/00, H02N 2/10, G04C 3/12

(54) **PIEZOELECTRIC DRIVE UNIT**

(71) Applicant: MINISWYS SA, 2502 Biel (CH)
(72) Inventor: Hoesli, Raphaël, 2560 Nidau (CH); Roten, Maxime, 2063 Fenin (CH); Baume, Loann, 2000 Neuchâtel (CH); Brumann, Michaël, 2503 Biel/Bienne (CH)
(74) Representative: Frei Patent Attorneys

(57) **Abstract**

A drive unit for driving a passive element (4) relative to an active element (1) comprises a resonator (2) and excitation means (23), at least a first arm (21) comprising, at an outer end of the arm, a first contact element (31) that is movable by way of oscillating movements of the first arm (21), thereby driving the passive element (4) relative to the active element (1). The passive element (4) comprises a first contact area (41), arranged to be in contact with a first contact element (31) of the first arm (21). A magnetic element (9) is arranged to exert a magnetic force causing a relative force between the active element (1) and passive element (4), whereby the first contact area (41) is pressed against the first contact element (31) with a pre-stress force.

## Description

The invention relates to the field of oscillatory drives. It relates to a drive unit as described in the preamble of the corresponding independent claims.

WO 2019/068708 A2 discloses a drive unit with an active element comprising a resonator with two arms arranged to drive a passive element by oscillation of the arms. A pre-stress element is arranged to exert a relative force between the active element and the passive element with a pre-stress force that has a component that is normal to a plane in which the resonator extends.

US 6'768'245 B1 discloses a piezoelectric motor, with which an active element, comprising a piezo element and contact elements, is elastically suspended, and by the piezo element is set into oscillations for driving a further body or passive element, by way of the contact elements.

US 7'429'812 B1 discloses a piezoelectric drive unit with a resonator which comprises at least two arms, arranged to extend from the same side of the resonator. Contact elements are located at the outer ends of the arms, and can be moved together or apart by way of oscillating movements of the arm pair, by which means a relative movement of a passive element with respect to an active element carrying the resonator can be effected. The passive element can be made to be elastic in itself. Alternatively or in addition, the passive element can be elastically supported relative to the arm pair. These measures allow to transfer the oscillating movement and resulting forces exerted by the two arms in an efficient manner, and/or to compensate for imperfect alignment of the parts.

JP S63 294279 A shows a piezoelectric drive in which a pair of arms drives an object that is arranged laterally to the direction of the arms, in parallel to but distanced from a plane in which the arms lie.

EP 2 824 824 A1 shows a similar arrangement, with an oscillating comb-like structure of arms, with a driven object arranged laterally from the structure of arms.

US 6 201 339 shows a piezoelectric drive in which a driven rotating plate lies in parallel to a set of arms that are roughly parallel to the plate and are pressed against the plate.

US 7 429 812 B2 shows various arrangements of piezoelectric drives with parallel arms acting on a driven object.

There is a need to simplify construction of such an oscillating drive unit, which can help to reduce manufacturing complexity and costs, and increase reliability.

It is an object of the invention to create a drive unit of the type mentioned initially, which constitutes an improvement over the prior art.

These objects are achieved by a drive unit according to the claims.

In embodiments, a drive unit according to claim 1 is realised.

In embodiments, the resonator and its parts are integrally shaped as a single piece of material.

In general, a magnetic element denotes an element that is made of a magnetically active material. A magnetically active material can be a permanently magnetised material, and an element made of such a material is called a permanent magnet. A magnetically active material can be a ferromagnetic material, and an element made of such a material is called a ferromagnetic element.

In general, when it is said that a magnetic force is exerted between two elements (such as, for example, an active element, passive element, base element or driven part), this means that points between which the magnetic forces act are located on these two elements. This can be realised by incorporating a magnetic element as part of such an element, or by the element being made of a magnetically active material.

Advantages of generating the pre-stress force by means of magnetic elements, compared to a physical connection, typically by a spring, can be at least one of reduction of friction losses, reduction of bias forces or parasitic forces in directions other than the direction in which the spring is designed to exert its main force, reduction in size, simplification of construction and simplification of the assembly process. These simplifications can be due to a reduction of number of parts and of mechanical connections. Simplification and/or reduced friction can reduce manufacturing complexity and costs, and increase reliability.

If the magnetic force acts between two elements that move together, then the advantages of this arrangement over one in which the pre-stress force is generated by a spring may not include reduction of friction between these two elements, but can still include a simplification of the construction.

In embodiments, a drive unit according to claim 2 is realised.

Typically the change in the magnetic field corresponds to a change in the field's spatial distribution. This can be caused by movement of a permanent magnet, or of a ferromagnetic element moving relative to a permanent magnet. The shape of such elements can be chosen to generate a spatial inhomogeneity of the magnetic field. When such elements are moved, this results in a temporal inhomogeneity of the field, which can be detected by the sensor.

In embodiments, a contour of the shape of such elements changes periodically along a linear or rotary dimension, according to the type of movement of the drive.

In embodiments, a drive unit according to claim 3 is realised.

In embodiments, a drive unit according to claim 4 is realised.

In embodiments, a drive unit according to claim 5 is realised.

Typically the other, magnetically interacting, element is a ferromagnetic element.

The permanent magnet and/or the other element can be embedded in a non-magnetic material having a smooth contour, e.g. a circular symmetry. In this way a circular element can be formed, to act as a rotor, being in mechanical contact with other elements, with the non-magnetic material protecting the embedded magnetically active elements from mechanical wear and corrosion.

Generally and for all embodiments, it is understood that an element comprising a permanent magnet or a ferromagnetic element means that the element itself can be made of a permanently magnetised or ferromagnetic material, respectively.

In embodiments, a drive unit according to claim 6 is realised.

In the present embodiment, this means the points between which the magnetic forces act are located on the active element and the passive element, respectively.

In embodiments, a drive unit according to claim 7 is realised.

This allows to exert a clamping force holding one or more active elements between these separate elements.

In embodiments, a drive unit according to claim 8 is realised.

In embodiments, a drive unit according to claim 9 is realised.

In embodiments, a drive unit according to claim 10 is realised.

In embodiments, a drive unit according to claim 11 is realised.

In embodiments, a drive unit according to claim 12 is realised.

The second resonator can be considered to be part of a further active element.

In embodiments, a **further active element** is present, and the contact body is rotationally symmetric with respect to a **rotary** movement axis, and the two - or more - active elements are arranged to **rotate** the same passive element.

In embodiments, a **further active element** is present, and the contact body is rotationally symmetric with respect to a **rotary-linear** movement axis, and one of the active elements is arranged to **rotate** the same passive element around the movement axis and the other one is arranged to **translate** the passive element along the movement axis.

In embodiments, a drive unit according to claim 13 is realised.

In embodiments, a drive unit according to claim 14 is realised.

In embodiments, the connection region and both the first arm and the second arm extend in parallel to a reference plane.

In embodiments, the joint is a rolling joint comprising rollers arranged between the base element and the driven part.

In embodiments, the joint allows for relative movement of the driven part relative to the base element along a linear axis or within a plane, and limits the relative movement in a direction that is normal to said linear axis or plane, and does not constrain the relative movement in the opposite direction, and wherein the pre-stress force constrains the relative movement in the opposite direction.

In embodiments, the joint allows for relative movement of the driven part relative to the base element around an axis of **rotation,** and limits the relative movement in a direction that is normal to said axis of rotation, and does not constrain the relative movement in the opposite direction, and wherein the pre-stress force constrains the relative movement in the opposite direction.

In embodiments, a drive unit according to claim 15 is realised.

In embodiments, a drive unit is provided for driving a passive element relative to an active element, wherein the active element comprises
- a resonator and at least one excitation means for exciting oscillations in the resonator,
- the resonator comprising at least **two arms** extending from a connection region of the resonator at the same side of the connection region,
- optionally, the resonator and the arms extending in parallel to a reference plane,
- **each of the arms** comprising, at an outer end of the arm, a contact element,
- the contact elements being movable by way of oscillating movements of the arms,
- the passive element being arranged to be driven and moved relative to the active element by way of these oscillating movements;
- the passive element comprises contact areas, each contact area being arranged to be in contact with a respective one of the contact elements.
**Therein** a magnetic element is arranged to exert a magnetic force causing a relative force between the active element and passive element, whereby each contact area is pressed against the respective contact element with a pre-stress force.

Each arm extending from the connection region can be said to be connected to the connection region at a proximal end of the arm, and its contact element is arranged at a distal end of the arm. The direction in which the arms extend corresponds to a resonator axis. The resonator with the excitation means and without the arms can be mirror-symmetric with regard to the resonator axis, e.g. when seen in a projection onto the reference plane. The resonator including the arms can be substantially mirror-symmetric with regard to the resonator axis. But there can be a slight asymmetry in that the midpoint between the arms can be shifted to one side (seen in the reference plane).

In embodiments, the first arm and second arm are arranged in 2-fold rotational symmetry to one another, with an axis of symmetry being normal to a reference plane parallel to which the resonator and the two arms extend.

In embodiments, the first arm and second arm are arranged in mirror symmetry to one another, with a mirror plane being normal to a reference plane parallel to which the resonator and the two arms extend, the first arm and second arm being arranged at opposite sides of the mirror plane and
- either the first arm and second arm extend in a direction normal to the mirror plane,
- or the first arm and second arm extend in a direction normal to the mirror plane.

In embodiments, the passive element is arranged to rotate around a rotary movement axis, in particular the rotary movement axis being normal to the reference plane.

In embodiments, the passive element is arranged to rotate around and to translate along a **rotary-linear movement** axis,.

In embodiments, the passive element is arranged to **translate along a linear** movement axis, in particular the linear movement axis being parallel to the reference plane, and in particular also parallel to the resonator axis.

In embodiments, a direction of linear motion and/or an axis of rotary motion of the passive element can be parallel to, orthogonal to, or inclined relative to a plane of resonator, such as the reference plane.

**In all embodiments it can be the case that** a contact element (part of the active element) touches the contact body (part of the passive element) at **contact areas.** Contact forces related to the pre-stress will be generally normal to the contact surfaces where the parts touch, and in particular normal to a contact surface in the contact area, in particular normal to a tangent plane thereof.

In embodiments, the resonator comprises a first surface and an opposed second surface, both parallel to the reference plane, and the first contact area and second contact area are arranged to come into contact only with contact edges of the contact regions, the contact edges being located where the contact regions, are adjacent to the first and second surface, respectively.

It is understood that being in contact means being in contact intermittently during operation of the drive unit, as the oscillating arms intermittently are in contact and move away from the respective areas on the contact body.

**In all embodiments it can be the case** that the oscillating movements of the one or more arms can cause the respective contact elements to move on an **elliptical path.** If two arms are present, this can cause them to move towards one another and away from another. Movement on each path can be clockwise or counter clockwise (seen in the plane of the resonator), and can be controlled by adjusting an excitation frequency of the excitation means. The excitation means typically is a piezoelectric element. Further details of such drives are described in the initially cited US'768'245 B1 and US'429'812 B1.

In a method for operating the drive unit, the excitation means is supplied with an electrical voltage that, at different times, oscillates with different frequencies, thereby generating different movement patterns of the arms and the contact regions, according to the frequency. A corresponding drive signal generating unit or voltage generator can be configured to generate a periodic drive signal at at least two different frequencies.

Different movement patterns can cause the passive element to rotate and/or move linearly, according to a degree of freedom defined by a suspension of the passive element relative to the active element. Different movement patterns can also cause different directions of movement, both for rotary and/or linear movement.

In particular, it can be the case that driving a rotary drive unit with a first driving frequency causes it to rotate clockwise, and driving it with a second driving frequency causes it to rotate counter clockwise.

**In all embodiments it can be the case** that the excitation means are arranged on the connection region in the following manner:
- If one arm is present, the excitation means can be arranged in a region where the active element is attached to a base element, wherein in particular this region comprises a node of the oscillation, preferably in all modes of oscillation that are used to drive the passive element.
- If two arms are present - of which one arm or both arms may be arranged to drive the passive element - the excitation means can be arranged in a connection region that connects the two arms. It can be the case that both arms can be driven by the same excitation means.

In embodiments, two excitation means are present, arranged on opposite sides of the resonator. The excitation means are preferably of a planar shape, extending in parallel to the reference plane. The excitation means can have the same shape and be arranged that their shapes coincide when projected along a normal to the reference plane.

**In all embodiments it can be the case** that the resonators of the further active element and the active element are manufactured **in one piece.** For example, they can be manufactured from a single piece of sheet material, for example, from a sheet of metal.

Throughout the present text, where parts are manufactured from a single piece of sheet material, for example, from a sheet of metal, this can done by a subtractive process, such as cutting or stamping or etching.

**In all embodiments** in which the resonator is not one of the magnetic elements, it can be the case that the resonator is made of a non-magnetic, in particular a non-ferromagnetic material. This prevents it from interfering with the magnetic field and from being subject to magnetic forces.

The subject matter of the invention will be explained in more detail in the following text with reference to exemplary embodiments which are illustrated in the attached drawings, which schematically show:
- Figure 1: elements of a drive unit;
- Figures 2-5: different arrangements of magnetic elements exerting an axial force on a passive element;
- Figure 6: a cross section showing contact edges in more detail, with a passive element in contact with edges at the opposite side of the active element;
- Figures 7-8: drive arrangements with two active elements;
- Figure 9: corresponding arrangements of passive elements;
- Figures 10-12: drive arrangements with three active elements;
- Figures 13-14: drive units with a single driving arm;
- Figures 15-18: different passive elements;
- Figure 19: a further drive arrangement with two active elements;
- Figure 20: corresponding arrangements of passive elements;
- Figure 21-22: drives with a pre-stress force acting on the drive and on a joint;
- Figure 23: a further drive arrangement with two active elements;
- Figure 24: a drive arrangement with two active elements and a magnetic element on the driven part;
- Figure 25: a generalised structure, with a serial kinematic structure; and
- Figure 26: a generalised structure, with a parallel kinematic structure.

In principle, identical or functionally identical parts are provided with the same reference symbols in the figures.

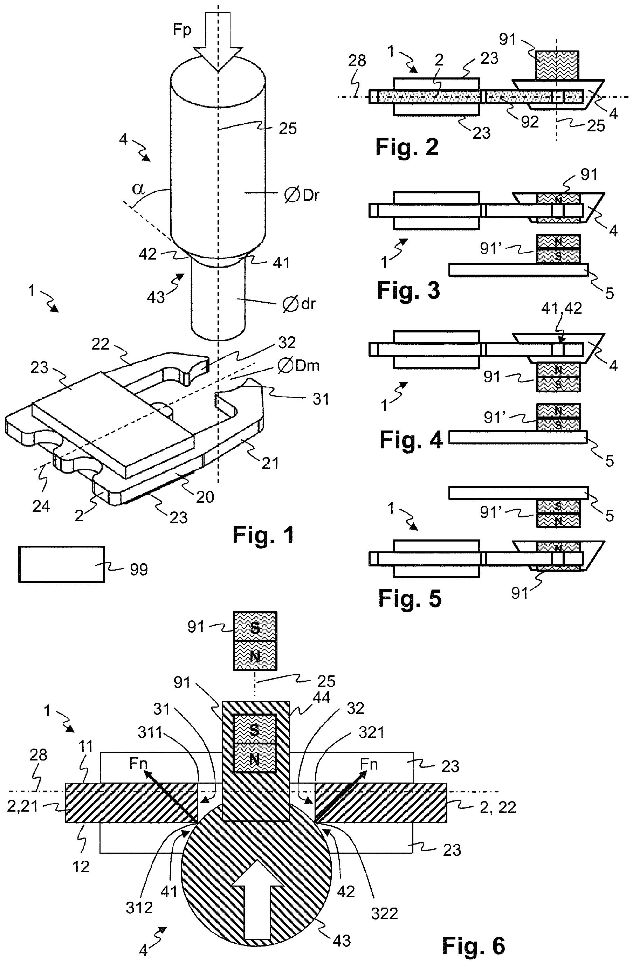

**Figure 1** schematically shows, in an exploded view, elements of a drive unit, with an active element 1 and a passive element 4. The active element 1 comprises a resonator 2 or resonator plate 2 and two excitation means 23. From a connection region 20 of the resonator 2, a first arm 21 and second arm 22 extend in the same direction, corresponding to a resonator axis 24. At the end of each arm there are respective first contact elements 31 and second contact elements 32, designed to contact and move the passive element 4 by means of contacting first contact areas 41 and second contact areas 42 of the passive element 4. These contact areas are not necessarily in a fixed relation to the moving passive element 4, rather they are the locations where the contact regions 31, 32 currently contact the passive element 4, as the passive element 4 rotates about a rotary movement axis 25 (in Figure 1) or translates (in other embodiments) relative to the active element 1.

As explained in US 7'429'812 B1 cited above, an excitation frequency of a voltage generator 99 driving the excitation means 23, which can be a piezoelectric element, can be varied, and depending on the frequency different modes of mechanical oscillations of the arms will be generated. For example, in one mode the contact regions 31, 32 will - seen in a projection onto the reference plane - both rotate clockwise, in another both will rotate counter clockwise, and in another one will rotate clockwise and the other one counter clockwise. Depending on the suspension of the passive element, i.e. rotary or linear or combined rotary-linear, the passive element will move accordingly.

The passive element 4 is pressed against the active element 1 such that contact forces arising at the contact regions 31, 32 are normal to a reference plane 28. The reference plane 28 is parallel to the resonator 2.

In the embodiment of **Figure 1****,** the passive element 4 is pressed towards the active element 1 with a pre-stress force **Fp** normal to the reference plane 28. The resulting forces arising at the contact regions 31, 32 arise at contact edges, where the contact regions 31, 32 contact a section of a contact body 43 passive element 4 where the diameter of the passive element 4 increases from a smaller diameter **dr** to a larger diameter **Dr,** and thus the contact body 43 can exert a force against the contact regions 31, 32 in a direction normal to the reference plane 28 and parallel to the rotary movement axis 25, which also is an axis of symmetry of the passive element 4. This force corresponds to components Fnz of contact forces Fn acting between the contact regions 31, 32 and the first contact area 41 and second contact area 42. These forces Fn are directed at an angle α to the reference plane 28.

A diameter **Dm** corresponding to a distance between the contact regions 31, 32 lies within these two diameters **dr, Dr.** Typically therefore only the contact edges, shown in more detail in **Figure 6****,** come into contact with the passive element 4, and not the parts of the surface of the resonator 2 that are normal to the resonator plane.

**Figures 2-5** show different arrangements of magnetic elements exerting an axial force on a passive element, for generating the axial pre-stress force Fp, based on the configuration of **Figure 1****.**

In the embodiment of **Figure 2****,** the passive element 4 comprises or is attached to a permanent magnet 91, and the resonator 2, in particular its arms, is made of a ferromagnetic material, thus constituting a ferromagnetic element 92. The permanent magnet 91 is at a distance from the plane in which the resonator 2 lies, and thus generates the pre-stress force in the direction of the rotary movement axis 25. The force acts between the passive element 4 and the resonator 2.

In the embodiment of **Figure 3****,** the passive element 4 comprises a permanent magnet 91, and a further permanent magnet 91' is attached to a base element 5. The two permanent magnets 91, 91' are oriented to attract one another.

In the embodiment of **Figure 4****,** the permanent magnet 91 on the passive element 4 is arranged closer to the further permanent magnet 91' than contact areas 41, 42 are. This stabilises the orientation of the passive element 4 relative to the resonator 2.

In the embodiment of **Figure 5****,** the two permanent magnets 91, 91' are oriented to repel one another.

In each one of the embodiments of **Figures 3 to 5****,** the pre-stress force acts between the passive element 4 and the base element 5. The active element 1 can be rigidly or resiliently attached to the base element 5 (the attachment is not shown).

In each one of the embodiments of **Figures 3 and 4****,** one of the permanent magnets 91, 91' shown can be replaced by a ferromagnetic element 92.

**Figure 6** shows a cross section showing contact edges in more detail, with a passive element 4 in contact with edges at the same side of the active element 1. The cross section corresponds to the embodiment of the previous **Figures,** with the difference that the conical section on which the first contact area 41 and second contact area 42 are located is replaced by a spherical section. The configuration of magnetic elements 9 is the same as in **Figure 3****.** The diameter of the link 44 is shown to be clearly smaller than an inner diameter defined by the contact regions 31, 32. This gives the rotary axis 25 of the passive element a certain freedom of movement, which allows for the rotary movement axis 25 to be not parallel to a virtual axis going through the diameter determined by the diameter of the contact regions 31, 32. In other words, the axis 25 must not necessarily be normal to the reference plane 28 of the active element. In other embodiments, the diameter of the link 44 can be only slightly smaller than the inner diameter between the contact regions 31, 32, in order to guide and stabilise the rotary movement axis 25. The situation regarding the edges is the same in the embodiments having two active elements 1, 1', with the further active element 1' mirroring the (first) active element 1. The resonator 2 has an first surface 11 and a second 12 parallel to one another and to the reference plane 28. Each of the first arm 21 and second arm 22 has a respective first contact element 31 and second contact element 32 at its end, facing the passive element 4. Where the first contact element 31 is adjacent to the first and second surface 11, 12, it comprises a first contact edge of the first arm 311 and second contact edge of the first arm 312, respectively. In the same way, the second contact element 32 comprises a first contact edge of the second arm 321 and second contact edge of the second arm 322. Because of the variation of diameter in the contact body 43, only the second contact edge of the first arm 312 and the second contact edge of the second arm 322 are in contact with the contact body 43. This defines corresponding first contact areas 41 and second contact areas 42 on the contact body 43. As already explained, the variation in diameter of the contact body 43 allows the passive element 4 to be pushed against the active element 1, by means of the pre-stress element 6, giving rise to contact forces normal to the reference plane 28. The force exerted by the pre-stress element 6 is shown by a block arrow.

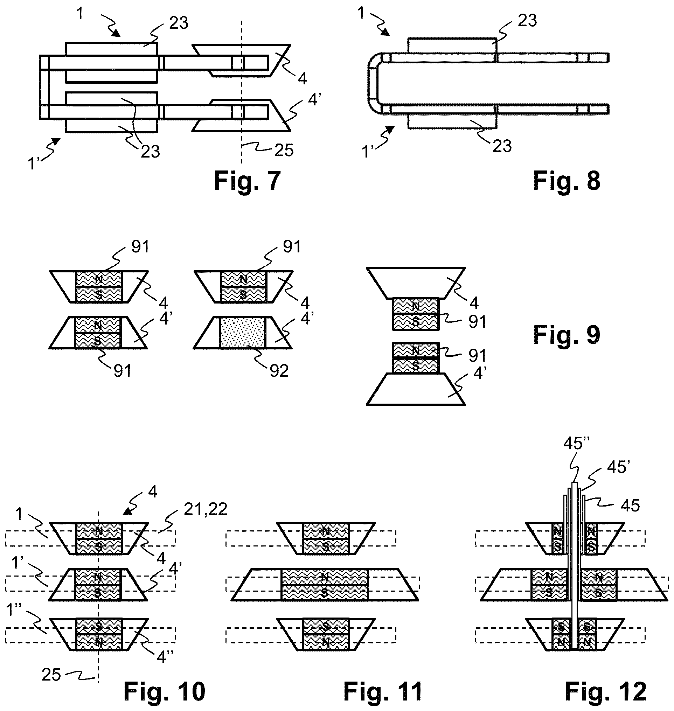

**Figures 7, 8****,** **19****,** **23 and 24** show drive arrangements with two active elements, that is, an active element 1 (or first active element 1) and a further active element 1', arranged to rotate a passive element. The two active elements 1, 1' are essentially of the same construction as those of Figure 1, but can vary by comprising two excitation means 23 or only a single excitation means 23, by comprising two active arms each or only one active arm each. Furthermore, the two active elements 1, 1' can be manufactured with their resonators 2 made from the same piece of material in one piece. In particular, they can be manufactured from the same piece of sheet material, such as a piece of sheet metal. The excitation means of the two active elements 1, 1' can be driven by the same voltage signal with the same excitation frequency, or by separate voltage signals, in particular at different excitation frequencies.

**Figure 7** shows a drive arrangement with two active elements, that is, an active element 1 (or first active element 1) and a further active element 1', each arranged to rotate a corresponding passive element 4, and further passive element 4', respectively, which can be part of a driven part (not illustrated). The passive elements 4, 4' have a common rotary movement axis 25. The rotary movement axis 25 is substantially normal to the reference plane 28 of the two active elements 1, 1' that is, their respective resonators 2. Each passive element 4, 4' is held and driven between the two arms of the respective active element 1, 1'. The passive elements 4, 4' can be arranged to rotate separately from one another.

Alternatively, the passive elements 4, 4' can be arranged to rotate together. In the latter case, they can be both connected to the driven part (not shown) in a way that their rotational positions are coupled but that they are free to move - within limits - relative to one another along the rotary movement axis 25. This allows to transmit torque from both of the two active elements 1, 1' to the driven part 7, while the freedom of movement along the rotary movement axis 25 allows to generate the pre-stress force against the two active elements 1, 1'.

**Figure 8** shows an alternative embodiment of the two active elements 1, 1', with a single excitation means 23 on each. The various arrangements of passive elements 4 here can be the same as for the embodiment of **Figure 7****.**

**Figure 9** shows arrangements of passive elements for use in combination with the drive arrangements of **Figures 7** and **8****.** From left to right: permanent magnets 91 arranged to attract one another, a permanent magnet 91 in combination with a ferromagnetic element 92, and permanent magnets 91 (of which one can be replaced by a ferromagnetic element) each at a distance from the respective associated resonator and contact elements, so as to stabilise the orientation of the passive elements relative to the respective active elements.

Whereas **Figure 9** shows the magnetic elements 9 of the passive elements attracting one another, in other embodiments they can be arranged to repel one another. Correspondingly, the passive elements are arranged in the respective active elements to be held against this repelling force.

**Figures 10-12** show drive arrangements with three active and three passive elements. Corresponding active elements 1, 1', 1" each with a respective first arm 21 and second arm 22, are indicated by dashed lines. The passive elements 4, 4', 4" have a common rotary movement axis 25. Each is held and driven between the two arms of the respective active element 1, 1', 1". The passive elements 4, 4', 4" can be arranged to rotate separately from one another.

In order to generate a reliable pre-stress force for the three passive elements 4, 4', 4", they are configured to alternately attract and repel one another. The geometry of each passive element 4, 4', 4" relative to the respective active element 1, 1', 1" is such that the respective pre-stress force is balanced by contact forces between the passive and active element (in particular the contact elements of the active element)

In the embodiment of **Figure 10****,** the three passive elements 4, 4', 4" have the same diameter. Corresponding inner radii of the respective active elements 1, 1', 1" also have the same diameter.

In the embodiment of **Figure 11****,** the middle one of the three passive elements 4, 4', 4" has a larger diameter than the others. Correspondingly, the inner radius of the respective middle one of the active elements 1, 1', 1" is larger than that of the others. For example, it is at least 1.1 or 1.2 or 1.5 or two times larger. This allows to impart a larger torque by the middle drive. This in turn allows to compensate for larger friction in the middle drive, caused by the fact that the pre-stress force acting on the middle drive is the sum of the pre-stress forces acting on the two outer drives.

In the embodiment of **Figure 12****,** each one of the three passive elements 4, 4', 4" is attached to a corresponding one of three coaxial axles 45, 45', 45".

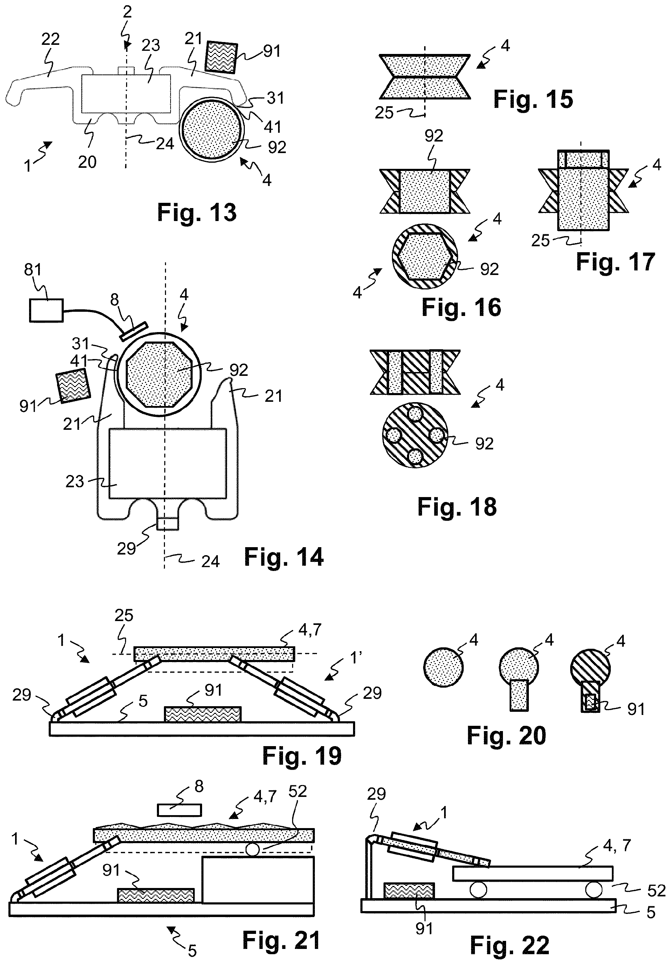

**Figures 13-14** show drive units with a single driving arm. A permanent magnet 91 is arranged to attract and exert a radial pre-stress force on the passive element 4. The passive element 4 comprises a permanent magnet 91.

In the embodiment of **Figure 13****,** the passive element 4 is stabilised between the first contact element 31 of the first arm 21, which drives the passive element 4, and a portion of the resonator 2 that serves as a bearing location. That is, is does not exhibit movement that drives the passive element 4. Alternatively, the bearing location can be arranged on a part of the base element 5.

In the embodiment of **Figure 14****,** the passive element 4 is stabilised by the shape of the first contact element 31 alone. So the first arm 21 defines the position of the passive element 4 in the plane normal to the rotary movement axis. Furthermore, a magnetic field sensor 8 is arranged near but not in contact with the passive element 4. As the passive element 4 moves, it causes variations in the magnetic field. The field is generated by permanent magnet 91 and is affected by the ferromagnetic element 92. In this way, the magnetic field sensor 8 allows to determine changes in the angular position of the passive element 4. The magnetic field sensor 8, together with associated signal processing unit, can serve to determine a position and/or an angular speed of the rotating passive element 4.

Such a magnetic field sensor 8 can be incorporated in any of the other embodiments in combination with an arrangement of a permanent magnet and/or a ferromagnetic element that when moving causes changes in the magnetic field.

**Figures 15-18** show different passive elements suited for use in embodiments with a rotating passive element. **Figure 15** shows a longitudinal cross section of a passive element 4 made of a ferromagnetic material, thus constituting a ferromagnetic element 92. It comprises a circumferential groove. A radial pre-stress force presses the sides of the groove, at corresponding contact areas at one side of the passive element 4, against the corresponding contact elements of the first arm (not illustrated). Simultaneously, the groove tapering inward defines the position of the passive element 4 along its rotary movement axis 25.

**Figure 16** shows an embodiment of a passive element 4 in a longitudinal and a radial cross section. The passive element 4 comprises a single piece ferromagnetic element 92 embedded inside the passive element 4. The shape of the ferromagnetic element 92 changes periodically when considered in a circumferential direction, around the passive element 4. Upon rotation, this will cause changes in the field generated by a corresponding permanent magnet (not shown). **Figure 17** shows a variation of this embodiment with the same radial cross section, with the change in shape of the ferromagnetic element 92 not or not exclusively in the region of the plane of the resonator, but distanced from this plane in the direction of the rotary movement axis 25. **Figure 18** shows an embodiment in which the ferromagnetic element 92 is not a single piece but comprises several separate elements, giving rise to the same effects as the single piece ferromagnetic element described above.

**Figure 19** shows a further drive arrangement with two active elements, an active element 1 (or first active element 1) and a further active element 1', arranged to translate and/or rotate the passive element 4 as part of the driven part 7 or coinciding with the driven part 7. In an embodiment, the driven part 7 is cylindrical, with a **linear-rotary** movement axis 25, and is held between the arms of the two active elements 1, 1'. Movement of the driven part 7 is constrained to a rotation about and translation along the **linear-rotary** movement axis 25. The active elements 1, 1' each comprise two active arms in contact with and driving the passive element 4. Depending on the geometry of the arms and the choice of excitation frequencies, the passive element 4 can be driven to rotate around or be translated along the **linear-rotary** movement axis 25. In other embodiments, the passive element 4 can only rotate or only translate. In the latter case, it can have a radial protrusion, shown with dashed lines.

**Figure 20** shows radial cross sections of corresponding arrangements of passive elements. From left to right: passive element 4 made of a ferromagnetic material, passive element 4 made of a ferromagnetic material with a radial protrusion, passive element 4 made of a non-magnetic material, comprising a permanent magnet 91 in the radial protrusion. Turning back to **Figure 20** it is evident that these embodiments of passive elements 4 are attracted by a permanent magnet 91 arranged on the base element 5, generating the pre-stress force between the passive element 4 and the two active elements 1, 1'. The protrusion, both with the permanent magnet 91 or the ferromagnetic material, causes the magnetic forces to stabilise the angular position of the passive element 4.

**Figure 21-22** show drives with a pre-stress force acting on the drive and on a joint. The drive of **Figure 21** is similar to that of **Figure 19****,** with one of the active elements replaced by a linear or rotary-linear joint 52. The passive element 4 is attracted by a permanent magnet 91 arranged on the base element 5, generating the pre-stress force between the passive element 4 and the two active element 1, and a pre-stress force on the joint 52. The latter can serve to hold and secure the passive element 4 in the joint 52. The forces acting between the base element 5 and the passive element 4 through the active element 1, through the magnetic interaction and through the joint 52 act in parallel.

Furthermore, a magnetic field sensor 8 is shown, in cooperation with a periodic change in the shape of the passive element 4, in the direction of the linear axis of movement. A combination of a magnetic field sensor 8 and such a shape of the passive element 4 can of course also be implemented in any of the other linear drives presented herein.

In the drive of **Figure 22****,** a permanent magnet 91 is arranged to exert a force on a resiliently suspended active element 1. The active element 1 can be implemented to be a ferromagnetic element 92, or can comprise a ferromagnetic element 92. The force causes a pre-stress force between the active element 1 and the passive element 4 (and driven part 7), and on the joint between the passive element 4 (and driven part 7) and the base element 5. This corresponds to a serial linkage through which the forces act.

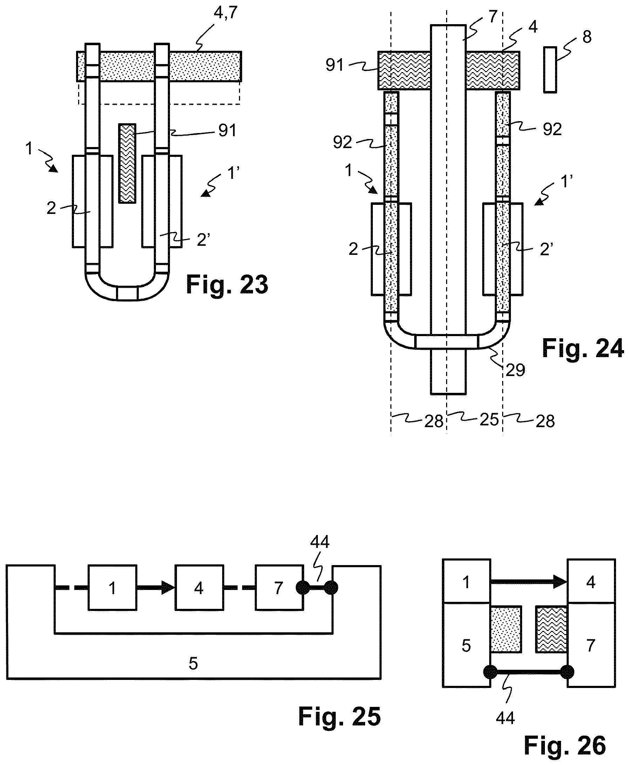

**Figure 23** shows a further drive arrangement with two active elements. Figure 23 is topologically the same as Figure 19, but with different angles between the two active elements 1, 1'. In particular, their reference planes 28 can be parallel to one another.

**Figure 24** shows a drive arrangement with two active elements, that is, an active element 1 (or first active element 1) and a further active element 1', arranged to rotate the passive element 4 as part of the driven part 7. The driven part 7 is cylindrical, with a **rotary** movement axis 25, and is held between the arms of the two active elements 1, 1' and in an opening formed in the attachment element 29 joining the two active elements 1, 1'. Movement of the driven part 7 is constrained to a rotation about the **rotary** movement axis 25, substantially parallel to the reference planes 28 of the two active elements 1, 1', or to a bisecting plane of these two reference planes 28. The active elements 1, 1' each comprise a single active arm in contact with the passive element 4. Whereas the figure shows two active elements 1, 1', in other embodiments, three or more active elements 1, 1' are present, and can be arranged with rotational symmetry around the rotary movement axis 25.

The passive element 4 comprises or is made of a permanent magnet 91. The resonators 2, 2' are made of a ferromagnetic material and thus constitute ferromagnetic elements 92. In the linear direction along the rotary movement axis 25, attraction between the passive element 4 and the resonators 2, 2' generates the pre-stress force.

**Figures 25 and 26** show, in a highly schematic manner, possible kinematic arrangements representing the different embodiments: A (intermittent) driving link between the active element 1 and passive element 4, through which driving forces are imparted, is represented by an arrow. A joint or movable a link 44 is present between the base element 5 and driven part 7.

**Figure 25** shows a generalised structure of a drive unit, with a serial kinematic structure. According to embodiments represented by **Figure 25****,** a **serial arrangement** of force-transmitting elements is present. The remaining two links between the base element 5 and the active element 1, and between the passive element 4 and the driven part 7, indicated by dashed lines, can be used to introduce pre-stress forces on both the driving link and/or the movable link 44. One of these remaining two links can comprise magnetic elements to generate the pre-stress force, the other one can be replaced by a rigid connection.

**Figure 26** shows a generalised structure of a drive unit, with a parallel kinematic structure. According to embodiments represented by **Figure 26****,** a parallel arrangement of force-transmitting elements is present: the contact force between the active element 1 and passive element 4, a force acting on a joint or movable link 44 between the base element 5 and driven part 7, and a pre-stress force generated by magnetic elements 9 arranged on the base element 5 and driven part 7, respectively. Variations of this structure can comprise
- a magnetic element 9 being on the active element 1 instead of the base element 5;
- a magnetic element 9 being on the passive element 4 instead of the driven part 7;
- the magnetic elements 9 being arranged to repulse instead of attract one another;

While the invention has been described in present embodiments, it is distinctly understood that the invention is not limited thereto, but may be otherwise variously embodied and practised within the scope of the claims.

## Claims

1. A drive unit for driving a passive element (4) relative to an active element (1), wherein the active element (1) comprises
• a resonator (2) and at least one excitation means (23) for exciting oscillations in the resonator (2),
• the resonator (2) comprising at least a first arm (21) extending from a connection region (20) of the resonator (2),
• the first arm (21) comprising, at an outer end of the arm, a first contact element (31),
• the first contact element (31) being movable by way of oscillating movements of the first arm (21),
• the passive element (4) being arranged to be driven and moved relative to the active element (1) by way of these oscillating movements;
• the passive element (4) comprising a first contact area (41), the first contact area (41) being arranged to be in contact with the first contact element (31),
**characterised in that**
a magnetic element (9) is arranged to exert a magnetic force causing a relative force between the active element (1) and passive element (4), whereby the first contact area (41) is pressed against the first contact element (31) with a pre-stress force.

2. The drive unit of one of the preceding claims, wherein a relative motion between the passive element (4) and the active element (1) changes a magnetic field generated by the magnetic element (9), and wherein the drive unit comprises a magnetic field sensor (8) arranged to detect changes in the magnetic field.

3. The drive unit of claim 2, wherein the magnetic element (9) or another, magnetically interacting element that affects the magnetic field have a shape that produces a temporal inhomogeneity in the magnetic field when the elements are moved relative to one another.

4. The drive unit of claim 3, wherein in order to measure a relative **rotation** between the active element (1) and passive element (4), the shape of the magnetic element (9) or the other, magnetically interacting element, are according to at least one of
- the permanent magnet (91) having a n-fold rotational symmetry with n being finite and larger than one;
- the other element (92) having a n-fold rotational symmetry with n being finite and larger than one.

5. The drive unit of claim 3, wherein in order to measure a relative **translation** between the active element (1) and passive element (4), the shape of the magnetic element (9) or the other, magnetically interacting element, are according to at least one of
- the permanent magnet (91) being linearly extended along a longitudinal direction, with its cross section varying along this direction;
- the other element (92) being linearly extended along a longitudinal direction, with its cross section varying along this direction.

6. The drive unit of one of the preceding claims, wherein the relative force between the active element (1) and passive element (4) is caused by the magnetic element 9 being arranged to exert a force **between the active element 1 and the passive element (4).**

7. The drive unit of one of claims 1 to 5, wherein the relative force between the active element (1) and passive element (4) is caused by the magnetic element (9) being arranged to exert a force **between separate elements of the passive element** (4).

8. The drive unit of one of claims 1 to 5, wherein the relative force between the active element (1) and passive element (4) is caused by the magnetic element (9) being arranged to exert a force **between separate elements of the active element** (1).

9. The drive unit of one of claims 1 to 5, wherein the relative force between the active element (1) and passive element (4) is caused by the magnetic element (9) being arranged to exert a force **between the active element (1) and a driven part (7) attached to the passive element (4),** in particular wherein the driven part (7) is rigidly attached to the passive element (4), or in particular wherein the driven part (7) is resiliently attached to the passive element (4) by a spring element.

10. The drive unit of one of claims 1 to 5, wherein the relative force between the active element (1) and passive element (4) is caused by the magnetic element (9) being arranged to exert a force **between the passive element (4) and a base element (5) attached to the active element (1),** in particular wherein the base element (5) is rigidly attached to the active element (1), or in particular wherein the base element (5) is attached to the active element (1) by a spring element.

11. The drive unit of one of claims 1 to 5, wherein the relative force between the active element (1) and passive element (4) is caused by the magnetic element (9) being arranged to exert a force **between a base element (5) and a driven part (7),** the base element (5) being attached to the active element (1) and the driven part (7) being attached to the passive element (4).

12. The drive unit of one of the preceding claims, comprising at least two resonators (2, 2'), each with an associated first arm (21, 21') and optionally an associated second arm (22, 22'), the arms being arranged to drive the same passive element (4).

13. The drive unit of one of the preceding claims, wherein the passive element (4) and the active element (1) are arranged to move a driven part (7) relative to a base element (5), the driven part (7) being partly constrained in its movement relative to the base element (5) by means of a joint (51, 52, 53), and the passive element (4) is held in the joint by means of the pre-stress force.

14. The drive unit of one of the preceding claims, comprising a second arm (22) extending from the connection region (20),
wherein the second arm (22) is arranged to move with oscillating movements that balance the oscillating movement of the first arm (21),
wherein the at least two arms (21, 22) extend in a substantially symmetric manner from the connection region (20),
the second arm (22) is arranged **not** to come into contact with the passive element (4).

15. The drive unit of one of claims 1 to 14, comprising a second arm (22) extending from the connection region (20),
wherein the second arm (22) is arranged to move with oscillating movements that balance the oscillating movement of the first arm (21),
wherein the at least two arms (21, 22) extend in a substantially symmetric manner from the connection region (20),
the second arm (22) comprising, at an outer end of the arm, a second contact element (32),
the second contact element (32) being movable by way of oscillating movements of the second arm (22),
the passive element (4) being arranged to be driven and moved relative to the active element (1) by way of these oscillating movements,
the passive element (4) comprising a second contact area (42), the second contact area (42) being arranged to be in contact with the second contact element (32),
the relative force exerted by the pre-stress element between the active element (1) and passive element (4) pressing the second contact area (42) against the second contact element (32) a pre-stress force.
